(19) Europäisches Patentamt

European Patent Office

Office européen des brevets

(11) **EP 0 968 094 B1**

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(51) Int Cl.$^7$: **B60C 23/06**, B60T 8/00

(21) Anmeldenummer: **98910599.4**

(22) Anmeldetag: **11.02.1998**

(86) Internationale Anmeldenummer:
**PCT/DE98/00371**

(87) Internationale Veröffentlichungsnummer:
**WO 98/42524 (01.10.1998 Gazette 1998/39)**

(54) **SYSTEM ZUR ERKENNUNG DES ZUSTANDS DER RÄDER EINES KRAFTFAHRZEUGS**

SYSTEM FOR DETECTING THE STATUS OF WHEELS OF AN AUTOMOBILE

SYSTEME POUR DETECTER L'ETAT DES ROUES D'UN VEHICULE AUTOMOBILE

(84) Benannte Vertragsstaaten:
**DE FR GB IT**

(30) Priorität: **22.03.1997 DE 19712097**

(43) Veröffentlichungstag der Anmeldung:
**05.01.2000 Patentblatt 2000/01**

(73) Patentinhaber: **ROBERT BOSCH GMBH**
**70442 Stuttgart (DE)**

(72) Erfinder:
• **STUIBLE, Ewald**
  **D-71735 Eberdingen (DE)**

• **BERGER, Walter**
  **D-74391 Erligheim (DE)**
• **PFAU, Martin**
  **D-71287 Weissach (DE)**

(56) Entgegenhaltungen:
**EP-A- 0 552 827**     **EP-B- 0 449 845**
**DE-A- 3 236 520**     **DE-A- 3 630 116**
**DE-A- 4 113 278**     **DE-C- 4 327 492**
**GB-A- 2 226 434**

**Beschreibung**

Stand der Technik

Die Erfindung geht aus von einem System zur Erkennung eines Zustands der Räder eines Kraftfahrzeugs nach dem Oberbegriff des Anspruchs 1, wie es aus der EP 0 552 827 A1 bekannt ist.

Aus dem Stand der Technik sind Antiblockierregelungs- , Antriebsschlupfregelungs-, Bremskraftverteilungs- und Fahrdynamikregelungssysteme bekannt, die die Brems- und/oder Antriebswirkung an den einzelnen Rädern oder einzelnen Fahrzeugachsen steuern. Eine wichtige Einflußgröße ist dabei unter anderem die Drehzahl der einzelnen Räder. Durch eine Verringerung des Durchmessers eines Rades, beispielsweise durch die Montage eines sogenannten Notrades oder durch einen Druckluftverlust, kann es durch eine verfälschte Raddrehzahlerfassung zu sicherheitskritischen Fehlberechnungen bei solchen System kommen. Noträder haben in der Regel einen Umfang, der um bis zu 25% kleiner ist als der der normalen Räder.

Aus dem Stand der Technik sind Systeme zur Reifen- bzw. Radzustandserkennung in vielerlei Variationen bekannt. Hierbei steht insbesondere im Vordergrund, einen von den übrigen Rädern abweichenden Rad- bzw. Reifendurchmesser zu detektieren. Solch eine Abweichung kann entweder durch einen Verlust der Reifenluft hervorgerufen oder durch ein Ersatzrad mit abweichendem Durchmesser, z.B. ein Notrad, bedingt sein.

In der DE-OS 36 30 116 und in der DE-PS 32 36 520 werden Einrichtungen zum Anzeigen des Zustandes von Reifen eines Fahrzeugs beschrieben, bei dem die Differenzen der Drehgeschwindigkeiten einzelner Räder bei bestimmten Betriebszuständen (ungebremste, unbeschleunigte Geradeausfahrt) ermittelt werden. Insbesondere wird vorgeschlagen, diese Drehgeschwindigkeiten auf die jeweilige Fahrzeuggeschwindigkeit zu normieren.

In der DE-OS 41 13 278 wird ein Reifentoleranzabgleich beschrieben, bei dem zum Abgleich der Raddrehzahlen Verhältnisse der Drehgeschwindigkeiten von Rädern auf jeweils einer Fahrzeugseite gebildet und daraus Korrekturwerte zum Abgleich abgeleitet werden.

In der EP,B1,0 449 845 wird bei einem Antiblockierregelsystem ein System zur Erkennung eines Notrades beschrieben, bei dem aus den Raddrehgeschwindigkeiten und der geschätzten Fahrzeuggeschwindigkeit (Referenzgeschwindigkeit) die Schlupfwerte der Räder ermittelt werden. Steigt ein Schlupfwert eine bestimmte Zeitdauer lang über einen Schwellwert an, so wird das Vorhandensein eines Notrades erkannt und der Antiblockierregler abgeschaltet.

Die Aufgabe der vorliegenden Erfindung besteht darin, die Rad- bzw. Reifenzustandserkennung zu optimieren.

Diese Aufgabe wird durch die Merkmale des Anspruchs 1 gelöst.

Vorteile der Erfindung

Wie schon erwähnt geht die Erfindung aus von einem System zur Erkennung eines Zustandes der Räder eines Kraftfahrzeugs. Hierzu sind Mittel zur Erzeugung von Drehzahlsignalen, die die Drehbewegungen der Räder repräsentieren, und Auswertemittel, mittels der abhängig von den erzeugten Signale ein Signal abgegeben wird, das einen anzeigerelevanten Zustand repräsentiert, vorgesehen. Der Kern der Erfindung besteht darin, daß die Auswertemittel derart ausgestaltet sind, daß zunächst abhängig von den erzeugten Drehzahlsignalen erste Differenzwerte für die Drehzahldifferenzen wenigstens zweier Fahrzeugräder auf den zwei Fahrzeugseiten gebildet werden. Abhängig von einem ersten Vergleich der gebildeten Differenzwerte mit vorgebbaren ersten Schwellwerten wird dann das Signal, das einen anzeigerelevanten Zustand repräsentiert, abgegeben.

Durch die Erfindung gelangt man zu einer sehr einfachen und kostengünstigen Radzustandserkennung, die auch während Kurvenfahrten des Fahrzeugs korrekt arbeitet. Insbesondere ist dabei vorgesehen, daß als Zustand der Räder erkannt wird, ob ein Rad mit einem geringeren Durchmesser als die übrigen Räder vorhanden ist (Notraderkennung), und/oder ob bei einem Rad ein Luftverlust aufgetreten ist (Reifenluftverlusterkennung).

Insbesondere ist vorgesehen, daß die für jede Fahrzeugseite gebildeten ersten Differenzwerte jeweils mit vorgebbaren ersten Schwellwerten verglichen werden und das Signal dann abgegeben wird, wenn der erste Differenzwert der einen Fahrzeugseite einen ersten, hinreichend großen Schwellwert überschreitet, während der erste Differenzwert der anderen Fahrzeugseite einen ersten kleinen Schwellwert unterschreitet.

Weiterhin kann vorgesehen sein, daß abhängig von den erzeugten Drehzahlsignalen zweite Differenzwerte für die Drehzahldifferenzen wenigstens zweier Fahrzeugräder im hinteren und vorderen Fahrzeugbereich gebildet werden. Das Signal, das einen anzeigerelevanten Zustand repräsentiert, wird dann erst abgegeben, wenn die Differenz der zweiten Differenzwerte sich innerhalb eines durch vorgebbare zweite Schwellwerte bestimmten Bandes befindet. Durch die Überprüfung, ob sich die Differenz der zweiten Differenzwerte innerhalb eines bestimmten Bandes befindet gelangt man insbesondere zu einer sicheren und exakten Erkenung eines vorhandenen Notrades.

Während die bisher beschriebenen Ausführungsformen nur anzeigen können, ob ein anzeigerelevanter Zustand der Räder bzw. Reifen vorliegt, kann durch die folgende Ergänzung auch ermittelt werden, welches der überwachten Räder einen anzeigerelevanten Zustand aufweist.

Hierzu ist das Signal weiterhin abhängig von einem dritten Vergleich der einzelnen Drehzahlsignale der Räder auf der rechten Fahrzeugseite und auf der linken Fahrzeugseite. Weiterhin ist das Signal abhängig von einem vierten Vergleich der zweiten Differenzwerte (Drehzahldifferenzen zweier Fahrzeugräder auf den zwei Fahrzeugseiten) untereinander.

In einer besonders vorteilhaften Ausgestaltung der Erfindung ist vorgesehen, daß das Signal, das einen anzeigerelevanten Zustand repräsentiert, erst dann abgegeben wird, wenn der anzeigerelevante Zustand eine vorgebbare Zeitdauer lang erkannt wurde. Es ist also, je nach Anforderung, eine zeitliche Filterung vorgesehen.

Für Systeme, die zur Erfassung der Drehzahlen der Hinterräder lediglich einen einzigen Sensor aufweisen, ist vorgesehen, daß das Signal dann abgegeben wird, wenn die gebildeten ersten Differenzwerte beide einen vorgebbaren dritten Schwellwert überschreiten.

Die ersten, zweiten und/oder die dritten Schwellwerte werden insbesondere abhängig von einem Wert vorgegeben, der die Fahrzeuglängsgeschwindigkeit repräsentiert.

Es sind insbesondere Anzeigemittel vorgesehen mittels der der durch Ansteuerung der Anzeigemittel durch das Signal ein anzeigerelevanter Zustand dem Fahrer des Fahrzeugs zur Anzeige gebracht wird. Alternativ oder ergänzend sind Brems- und/oder Antriebsregelungssysteme vorgesehen, dessen Betriebszustand abhängig von dem abgegebenen Signal geändert wird.

Weitere vorteilhafte Ausgestaltungen sind den Unteransprüchen zu entnehmen.

Zeichnung

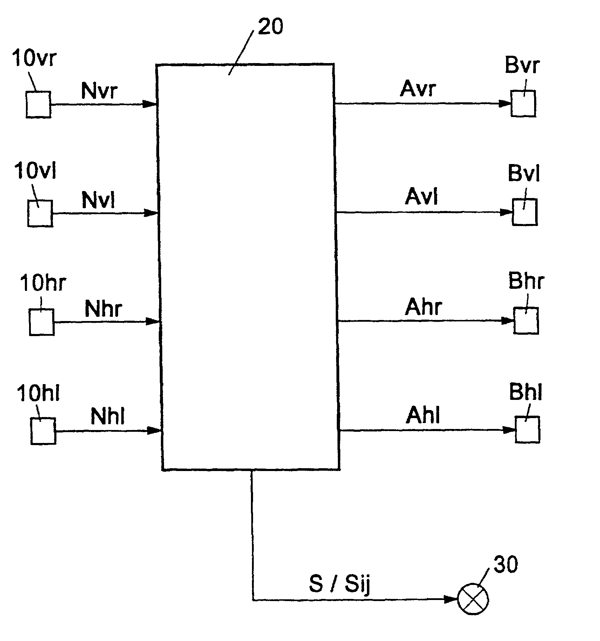

Die Figur 1 zeigt ein Blockschaltbild des erfindungsgemäßen Systems.

Ausführungsbeispiel

Anhand der Zeichnung wird ein Ausführungsbeispiel der Erfindung näher erläutert.

Die Figur 1 zeigt mit den Bezugszeichen 10ij Drehzahlsensoren, die die Drehzahl der Fahrzeugräder erfassen und entsprechende Drehzahlsignale Nij abgeben. Der Index i kennzeichnet dabei die Zugehörigkeit der entsprechenden Größe zur Vorder- bzw. Hinterachse und der Index j die Zugehörigkeit der entsprechenden Größe zur rechten oder linken Fahrzeugseite. Die Raddrehzahlsignale Nij werden der Bremsenansteuerungseinheit 20 zugeführt, die als bekannte Antiblockierregelungs-, Antriebsschlupfregelungs-, Bremskraftverteilungs- und/oder Fahrdynamikregelungssysteme wenigstens die Bremswirkung an den Fahrzeugbremsen Bij durch die Signale Aij steuern.

Die Bremsenansteuerungseinheit 20 ermittelt auch das Signal S bzw. Sij und steuert damit die Anzeigevorrichtung 30 an.

Wie schon erwähnt geht es bei der Erfindung darum, daß ein Rad mit einem von den anderen Rädern abweichenden Umfang bzw. Durchmesser detektiert wird. In diesem Ausführungsbeispiel soll dabei in erster Linie die Erkennung eines Notrades beschrieben werden. Hierzu sind unterschiedliche Schritte erforderlich.

1. Erkennung eines Notrades:

Schritt a):

Aus den erfaßten Raddrehzahlen an der Hinter- und Vorderachse werden zunächst die Radgeschwindigkeitsdifferenzen $\Delta h$ und $\Delta v$ an jeder Achse ermittelt:

$$\Delta v = (Nvl - Nvr)$$

und

$$\Delta h = (Nhl - Nhr)$$

Dann wird überprüft, ob die Differenz $(\Delta v - \Delta h)$ zwischen diesen Radgeschwindigkeitsdifferenzen innerhalb eines Bandes liegt, wobei das Band durch die Schwellwerte $\Delta vh_{min}$ und $\Delta vh_{max}$ bestimmt wird:

$$\Delta vh_{max} > [(Nvl - Nvr) - (Nhl - Nhr)] > \Delta vh_{min}$$

bzw. (Bedingung 1)

$$\Delta vh_{max} > [\Delta v - \Delta h] > \Delta vh_{min}$$

Dabei sind die Schwellwerte $\Delta vh_{min}$ und $\Delta vh_{max}$ derart bestimmt, daß sie die kleinste und größte vorkommende Abweichung der Differenz $(\Delta v-\Delta h)$ darstellen. Bei einer Notraderkennung kann dann das Notradband durch die Schwellwerte $\Delta vh_{min}$ und $\Delta vh_{max}$ beispielsweise wie folgt bestimmt sein:

$$\Delta vh_{max} = 15\% \text{ der Fahrzeuglängsgeschwindigkeit plus 2 km/h}$$

$$\Delta vh_{min} = 12\% \text{ der Fahrzeuglängsgeschwindigkeit minus 2 km/h}$$

Liegt die Differenz $(\Delta v-\Delta h)$ innerhalb des Bandes $[\Delta vh_{min}; \Delta vh_{max}]$, ist also die Bedingung 1 erfüllt, so ist dies ein erster Hinweis auf das Vorliegen eines Rades mit einem anzeigerelevanten abweichenden Durchmesser.

Schritt b):

Aus den erfaßten Drehzahlen der Räder an der rechten und linken Fahrzeugseite werden die Beträge der Geschwindigkeitslängsdifferenzen $\Delta r$ und $\Delta l$ ermittelt:

$$\Delta r = |Nvr-Nhr|$$

und

$$\Delta l = |Nvl-Nhl|$$

Dann wird überprüft, ob eine der Geschwindigkeitslängsdifferenzen an einer Fahrzeugseite einen hinreichend großen Wert aufweist, während die andere Geschwindigkeitslängsdifferenz nur einen geringfügig kleinen Wert annimmt. Das bedeutet, daß überprüft wird, ob:

$$\Delta r > SW1 \text{ UND } \Delta l < SW2 \qquad \text{(Bedingung 2)}$$

ODER

$$\Delta l > SW1 \text{ UND } \Delta r < SW2$$

Hierbei bedeutet die Begriffe UND und ODER die bekannten aussagelogischen Verknüpfungen.
Dabei können die Schwellwerte SW1 und SW2 beispielsweise bei einer Notraderkennung wie folgt bestimmt sein:
SW1 = 3% der Fahrzeuglängsgeschwindigkeit plus 1,5 km/h
SW2 = 1,5% der Fahrzeuglängsgeschwindigkeit plus 3 km/h
Ist die Bedingung 2 erfüllt, so ist dies ein Anzeichen für das Vorliegen eines Rades mit einem anzeigerelevanten abweichenden Durchmesser.
Die Bedingung 2 kann entweder in Kombination mit der Bedingung 1 zur Erkennung einer anzeigerelevanten Abweichung benutzt werden, es kann aber auch vorgesehen sein, daß die Bedingung 2 in Alleinstellung zur Abgabe des Signals S an die Anzeige 30 verwendet wird.
Im letzten Fall (Überprüfung der Bedingung 2 in Alleinstellung) gelangt man zu einem sehr einfachen und kostengünstigen System zur Notraderkennung, das insbesondere auch bei Kurvenfahrten sicher arbeitet.
Im letzten Fall als auch im ersten Fall gelangt man jedoch nur zu der Erkenntnis, ob ein Notrad vorliegt oder nicht, die Position ders Notrades kann jedoch damit nicht ermittelt werden. Hierzu sind die folgenden weiteren Schritte erforderlich.

Wurde in den Schritten a) und b) festgestellt, daß die Bedingungen 1 und 2 erfüllt sind, so werden die Flags "Flag_NR$_{vl}$" "Flag_NR$_{hl}$", "Flag_NR$_{vr}$" und "Flag_NR$_{hr}$" gesetzt.

2. Erkennung der Notradposition:

Durch einen Vergleich der Radgeschwindigkeitsdifferenzen längs und quer kann die Position des Notrades ermittelt werden. Dies bedeutet im einzelnen das Abfragen der folgenden Bedingungen bzw. die Änderung der im Teil 1. gesetzten Flags:

Schritt c):

Auswertung der Längsdifferenzen:

Nvl - Nhl ist negativ ------> clear Flag_NR$_{vl}$
Nvl - Nhl ist positiv ------> clear Flag_NR$_{hl}$
Nvr - Nhr ist negativ ------> clear Flag_NR$_{vr}$
Nvr - Nhr ist positiv ------> clear Flag_NR$_{hr}$

Dabei kann die Abfrage "positiv ?" oder "negativ ?" selbstverständlich den Vergleich der jeweiligen Differenz mit einem kleinen positiven oder negativen Schwellwert nahe Null bedeuten.

Schritt d):

Auswertung Querdifferenzen:

$\Delta$h > $\Delta$v ------> clear Flag_NR$_{vl}$ und Flag_NR$_{vr}$

$\Delta$v > $\Delta$h ------> clear Flag_NR$_{hl}$ und Flag_NR$_{hr}$

mit $\Delta$v = (Nvl-Nvr) und $\Delta$h = (Nhl-Nhr).

Das Flag "Flag_NR$_{ij}$", das nach den Schritten a), b), c) und d) gesetzt bleibt, bestimmt die Positon ij des Notrades, woraufhin das Signals Sij an die Anzeigeeinheit 30 abgegeben wird, die dann in geeigneter Weise die Position des Notrades anzeigt.

Alternativ oder ergänzend zur Anzeige kann durch das Signal S (es ist ein Notrad montiert) oder Sij (das montierte Notrad hat die Postion ij) Die Betriebsweise des Brems- und/oder Antriebsregelungssystem 20 verändert werden. Dies kann insbesondere bei der bloßen Erkennung der Existenz eines Notrades (Signal S) eine Abschaltung des Systems bedeuten. Ist die Position des Notrades bekannt, können die Regelung- bzw. Steuerungsalgorithmen im Steuergerät 30 entsprechend dem unterschiedlichen Umfang des Notrades abgeändert werden.

Weiterhin kann vorgesehen sein, daß eine Filterung der Ergebnisse je nach Anforderung stattfindet. So erkennt beispielsweise eine Antriebsschlupfregelung (ASR) ein Notrad bei Vorliegen der Notradbedingungen nach einer Sekunde, während eine Antiblockierschutzsystem (ABS) ein Notrad nach fünf Sekunden erkennt. Eine Einrichtung, die einen Drehzahlfehler überwacht, wird dabei im wesentlichen ungefiltert angesteuert.

Bei Systemen, die die Drehzahlen Nhr und Nhl der Hinterräder durch einen einzigen Drehzahlsensor detektieren, führt das Erfüllen der zusätzlichen Bedingung

Nhl - Nvl > SW3

UND

Nhr - Nvr > SW3

zum Setzen der beiden Notradflags "Flag_NR$_{hr}$" und "Flag_NR$_{hl}$".

**EP 0 968 094 B1**

**Patentansprüche**

1. System zur Erkennung eines Zustandes der Räder eines Kraftfahrzeugs mit Mitteln (10ij) zur Erzeugung von Drehzahlsignalen (Nij), die die Drehbewegungen der Räder repräsentieren, und Auswertemitteln (20), mittels der

   - abhängig von den erzeugten Drehzahlsignalen (Nij) erste Differenzwerte ($\Delta r$, $\Delta l$) für die Drehzahldifferenzen wenigstens zweier Fahrzeugräder auf den zwei Fahrzeugseiten gebildet werden, und
   - abhängig von einem ersten Vergleich der gebildeten Differenzwerte ($\Delta r$, $\Delta l$) mit vorgebbaren ersten Schwellwerten (SW1, SW2) ein Signal (S; Sij), das einen anzeigerelevanten Zustand repräsentiert, abgegeben wird,

   **dadurch gekennzeichnet, daß**
   die Auswertemittel (20) derart ausgestaltet sind, daß das Signal (S; Sij) dann abgegeben wird, wenn der erste Differenzwert der einen Fahrzeugseite einen ersten, hinreichend großen Schwellwert (SW1) überschreitet, während der erste Differenzwert der anderen Fahrzeugseite einen ersten, kleinen Schwellwert (SW2) unterschreitet (Schritt b).

2. System nach Anspruch 1, **dadurch gekennzeichnet, daß** die Auswertemittel (20) derart ausgestaltet sind, daß abhängig von den erzeugten Drahzahlsignalen (Nij) zweite Differenzwerte ($\Delta h$, $\Delta v$) für die Drehzahldifferenzen wenigstens zweier Fahrzeugräder im hinteren und vorderen Fahrzeugbereich gebildet werden, und das Signal (S; Sij) erst dann abgegeben wird, wenn die Differenz ($\Delta vh$) der zweiten Differenzwerte sich innerhalb eines durch vorgebbare zweite Schwellwerte ($\Delta vh_{min}$, $\Delta vh_{max}$) bestimmten Bandes befindet (Schritt a).

3. System nach Anspruch 1, **dadurch gekennzeichnet, daß** die Auswertemittel (20) derart ausgestaltet sind, daß abhängig von den erzeugten Drehzahlsignalen (Nij) zweite Differenzwerte ($\Delta h$, $\Delta v$) für die Drehzahldifferenzen wenigstens zweier Fahrzeugräder im hinteren und vorderen Fahrzeugbereich gebildet werden, und das Signal (S; Sij) erst dann abgegeben wird, wenn die Differenz ($\Delta vh$) der zweiten Differenzwerte sich innerhalb eines durch vorgebbare zweite Schwellwerte ($\Delta vh_{min}$, $\Delta vh_{max}$) bestimmten Bandes befindet (Schritt a), wobei das Signal (Sij) weiterhin abhängig ist

   - von einem dritten Vergleich der Drehzahlsignale (Nij) der Räder auf der rechten Fahrzeugseite und von einem dritten Vergleich der Drehzahlsignale (Nij) der Räder auf der linken Fahrzeugseite (Schritt c) und

   - von einem vierten Vergleich der zweiten Differenzwerte ($\Delta h$, $\Delta v$) untereinander (Schritt d).

4. System nach Anspruch 1 und 2, **dadurch gekennzeichnet, daß** das Signal (S; Sij) erst dann abgegeben wird, wenn der anzeigerelevante Zustand eine vorgebbare Zeitdauer lang erkannt wurde.

5. System nach Anspruch 1 und 2, **dadurch gekennzeichnet, daß** die Auswertemittel (20) derart ausgestaltet sind, daß das Signal (S; Sij) dann abgegeben wird, wenn die gebildeten ersten Differenzwerte ($\Delta r$, $\Delta l$) beide einen vorgebbaren dritten Schwellwert (SW3) überschreiten.

6. System nach Anspruch 1, **dadurch gekennzeichnet, daß** Anzeigemittel (30) vorgesehen sind, mittels der durch Ansteuerung der Anzeigemittel (30) durch das Signal (S; Sij) ein anzeigerelevanter Zustand dem Fahrer des Fahrzeugs zur Anzeige gebracht wird und/oder ein Brems- und/oder Antriebsregelungssystem vorgesehen ist, dessen Betriebszustand abkängig von dem abgegebenen Signal (S; Sij) geändert wird.

7. System nach Anspruch 1, 2, 3 oder 5, **dadurch gekennzeichnet, daß** die ersten und/oder die zweiten und/oder die dritten Schwellwerte abhängig von einem die Fahrzeuglängsgeschwindigkeit repräsentierenden Wert vorgegeben werden.

8. System nach Anspruch 1, **dadurch gekennzeichnet, daß** die Auswertemittel (20) derart ausgestaltet sind, daß abhängig von den erzeugten Drehzahlsignalen (Nij) zweite Differenzwerte ($\Delta h$, $\Delta v$) für die Drehzahldifferenzen wenigstens zweier Fahrzeugräder im hinteren und vorderen Fahrzeugbereich gebildet werden, und das Signal (S; Sij) erst dann abgegeben wird, wenn die Differenz ($\Delta vh$) der zweiten Differenzwerte sich innerhalb eines durch vorgebbare zweite Schwellwerte ($\Delta vh_{min}$, $\Delta vh_{max}$) bestimmten Bandes befindet (Schritt a).

**Claims**

1.  System for detecting a state of the wheels of a motor vehicle having means (10ij) for generating rotational speed signals (Nij) which represent the rotary movements of the wheels, and evaluation means (20), by means of which

    -   first difference values ($\Delta$r, $\Delta$l) for the rotational speed differences of at least two vehicle wheels on the two sides of the vehicle are formed as a function of the rotational speed signals (Nij) generated, and
    -   a signal (S; Sij) which represents a state relevant for display is output as a function of a first comparison between the difference values ($\Delta$r, $\Delta$l) formed and prescribable first threshold values (SW1, SW2),

    **characterized in that** the evaluation means (20) are configured in such a way that the signal (S; Sij) is output whenever the first difference value of one side of the vehicle overshoots a first, sufficiently large threshold value (SW1), while the first difference value of the other side of the vehicle undershoots a first, small threshold value (SW2) (step b).

2.  System according to Claim 1, **characterized in that** the evaluation means (20) are configured in such a way that second difference values ($\Delta$h, $\Delta$v) for the rotational speed differences of at least two vehicle wheels in the rear and front regions of the vehicle are formed as a function of the generated rotational speed signals (Nij), and the signal (S; Sij) is not output until the difference ($\Delta$vh) between the second difference values is located within a band determined by prescribable second threshold values ($\Delta vh_{min}$, $\Delta vh_{max}$) (step a).

3.  System according to Claim 1, **characterized in that** the evaluation means (20) are configured in such a way that second difference values ($\Delta$h, $\Delta$v) for the rotational speed differences of at least two vehicle wheels in the rear and front regions of the vehicle are formed as a function of the generated rotational speed signals (Nij), and the signal (S; Sij) is not output until the difference ($\Delta$vh) of the second difference values is located within a band determined by prescribable second threshold values ($\Delta vh_{min}$, $\Delta vh_{max}$) (step a), the signal (Sij) further being a function of

    -   a third comparison of the rotational speed signals (Nij) on the wheels on the right-hand side of the vehicle, and of a third comparison of the rotational speed signals (Nij) of the wheels on the left-hand side of the vehicle (step c), and
    -   of a fourth comparison of the second difference values ($\Delta$h, $\Delta$v) one among another (step d).

4.  System according to Claims 1 and 2, **characterized in that** the signal (S; Sij) is not output until the state relevant for display has been detected over a prescribable time duration.

5.  System according to Claims 1 and 2, **characterized in that** the evaluation means (20) are configured in such a way that the signal (S; Sij) is output whenever the first difference values ($\Delta$r, $\Delta$l) formed both overshoot a prescribable third threshold value (SW3).

6.  System according to Claim 1, **characterized in that** display means (30) are provided by means of which a state relevant for display is displayed to the driver of the vehicle by driving the display means (30) with the signal (S; Sij), and/or a braking and/or drive control system is provided whose operating state is altered as a function of the output signal (S; Sij).

7.  System according to Claim 1, 2, 3 or 5, **characterized in that** the first and/or the second and/or the third threshold values are prescribed as a function of a value representing the longitudinal speed of the vehicle.

8.  System according to Claim 1, **characterized in that** the evaluation means (20) are configured in such a way that second difference values ($\Delta$h, $\Delta$v) for the rotational speed differences of at least two vehicle wheels in the rear and front regions of the vehicle are formed as a function of the rotational speed signals (Nij) generated, and the signal (S; Sij) is not output until the difference ($\Delta$vh) of the second difference values is located within a band determined by prescribable second threshold values ($\Delta vh_{min}$, $\Delta vh_{max}$) (step a).

**Revendications**

1.  Système de détection de l'état des roues d'un véhicule automobile, comprenant des moyens (10ij) pour générer des signaux de vitesse de rotation (Nij) représentant les mouvements de rotation des roues, et des moyens d'exploitation (20) à l'aide desquels :

- en fonction des signaux de vitesse de rotation de roue (Nij) on génère des premières valeurs de différence (Δr, Δl) pour les différences de vitesse de rotation d'au moins deux roues du véhicule sur les deux côtés de celui-ci, et
- en fonction d'une première comparaison des valeurs de différence formées (Δr, Δl) avec des premières valeurs de seuil prédéterminées (SW1, SW2), on émet un signal (Sij) qui représente un état significatif (destiné à être affiché),

**caractérisé en ce que**
les moyens d'exploitation (20) sont réalisés de façon que le signal (S, Sij) soit alors émis si la première valeur de différence d'un côté du véhicule dépasse un premier seuil (SW1) suffisamment grand pendant que la première différence de l'autre côté du véhicule passe en dessous d'un premier seuil (SW2) petit (étape b).

2. Système selon la revendication 1,
**caractérisé en ce que**
les moyens d'exploitation (20) sont réalisés pour qu'en fonction des signaux de vitesse de rotation générés (Nij), on forme des secondes valeurs de différence (Δh, Δv) pour les différences de vitesse de rotation d'au moins deux roues du véhicule dans la zone arrière et la zone avant du véhicule, et
le signal (S, Sij) est seulement émis si la différence (Δvh) des secondes valeurs de différence se trouve dans une certaine bande définie par deux seuils prédéterminés ($\Delta vh_{min}$, $\Delta vh_{max}$) (étape a).

3. Système selon la revendication 1,
**caractérisé en ce que**
les moyens d'exploitation (20) sont conçus pour qu'en fonction des signaux de vitesse de rotation (Nij) générés, on forme des secondes valeurs de différence (Δh, Δv) pour les différences de vitesse de rotation d'au moins deux roues du véhicule dans la partie avant et la partie arrière de celui-ci, et
le signal (S, Sij) est seulement émis si la différence (Δv-Δh) des secondes valeurs de différence se situe à l'intérieur d'une bande définie par des seconds seuils prédéterminés ($\Delta vh_{min}$, $\Delta vh_{max}$) (étape a), et le signal (Sij) dépend en outre :

- d'une troisième comparaison des signaux de vitesse de rotation (Nij) des roues du côté droit du véhicule et d'une troisième comparaison des signaux de vitesse de rotation (Nij) des roues du côté gauche du véhicule (étape c), et
- d'une quatrième comparaison des secondes valeurs de différence (Δh-Δv) entre-elles (étape d).

4. Système selon l'une quelconque des revendications 1 et 2,
**caractérisé en ce que**
le signal (S ; Sij) est seulement émis si l'état significatif dure pendant une durée prédéterminée.

5. Système selon les revendications 1 et 2,
**caractérisé en ce que**
les moyens de sélection fournissent le signal (S, Sij) si les valeurs de différence formées (Δr, Δl) des deux troisièmes seuils prédéterminés (SW3) sont dépassés

6. Système selon la revendication 1,
**caractérisé par**

- des moyens d'affichage (30) commandés par le signal (S, Sij), qui affichent un état méritant d'être affiché pour le conducteur du véhicule et/ou
- un système de régulation de frein et/ou d'entraînement dont l'état de fonctionnement est modifié en fonction du signal fourni (S, Sij).

7. Système selon les revendications 1, 2, 3 ou 5,
**caractérisé en ce que**
les premières et/ou les secondes et/ou les troisièmes valeurs de seuil sont prédéterminées selon une valeur représentant là vitesse longitudinale du véhicule.

8. Système selon la revendication 1,
   **caractérisé en ce qu'**
   en fonction des signaux de vitesse de rotation (Nij) engendrés, les moyens d'exploitation (20) forment des secondes valeurs ($\Delta h$, $\Delta v$) des différences de vitesse de rotation d'au moins deux roues du véhicule dans la zone arrière et dans la zone avant du véhicule, et le signal (S, Sij) est fourni seulement si la différence ($\Delta vh$) des secondes valeurs de différence se trouve dans une bande déterminée par les secondes valeurs de seuil prédéterminées ($\Delta vh_{min}$, $\Delta vh_{max}$) (étape a).